# EUROPÄISCHE PATENTSCHRIFT

(11) **EP 2 353 365 B1**
(45) Veröffentlichungstag und Bekanntmachung des Hinweises auf die Patenterteilung: **03.04.2013**
(21) Anmeldenummer: 11000408.2
(22) Anmeldetag: 20.01.2011
(51) Int. Cl.: A01D 90/00, A01K 5/00, A01F 29/00

(54) **Zerkleinerungsvorrichtung für Großballen**
Reduction tool for large bales
Dispositif de broyage pour grands ballons

(30) Priorität: 02.02.2010 DE 202010001749 U
(43) Veröffentlichungstag der Anmeldung: 10.08.2011
(73) Patentinhaber: SCHAAFF & MEURER GmbH, 45357 Essen (DE)
(72) Erfinder: Loebnitz, Andreas, 45357 Essen (DE)
(74) Vertreter: Schoenen, Norbert

(56) Entgegenhaltungen:
- US-A- 3 129 739
- US-A- 3 576 204
- US-A- 3 599 688

## Beschreibung

Die Erfindung betrifft eine Zerkleinerungsvorrichtung für Großballen.

Derartige große Quaderballen, die in der Landwirtschaft produziert werden, haben eine Breite von 80 bis 120 cm, eine Höhe von 50 bis 100 cm und eine einstellbare Länge von bis zu 300 cm. Wegen der raumsparenden Lagermöglichkeit gegenüber Rundballen und dem erheblich geringeren Arbeitsaufwand beim Transport und der Handhabung im Vergleich zu den herkömmlichen Kleinballen haben sich die großen Quaderballen, insbesondere auch beim Verpressen von Heu für Pferdehöfe durchgesetzt. Die Quaderballen werden mit etwa sechs verknoteten Schnüren fixiert. Sie wiegen im Falle von Heu oder Stroh 300 bis 500 kg.

Die unhandliche Größe und das relativ hohe Gewicht erfordern allerdings beim Transport einen Maschineneinsatz. Wenn die Ballen einmal aufgeschnitten sind, lassen sie sich nicht mehr mit den gängigen Maschinen handhaben. Die Breite von oftmals 120 cm und die Länge von typischerweise 200 bis 220 cm verhindern den Transport der Quaderballen als Ganzes durch manche Pferdestalltüren hindurch.

Vor der manuellen Handhabung und dem Transport in den Pferdestall müssen die Quaderballen daher zerkleinert werden, was wiederum arbeitsaufwändig, umständlich und zeitraubend ist.

Eine Zerkleinerungsvorrichtung ist aus US-A-3,129,739 bekannt.

Der Erfindung liegt daher die Aufgabe zugrunde, eine Möglichkeit zum Einsatz von großen Quaderballen in Pferdehöfen zu schaffen, ohne dass die Quaderballen auf umständliche Weise manuell zerkleinert werden müssen.

Diese Aufgabe wird durch die Zerkleinerungsvorrichtung der eingangs genannten Art erfindungsgemäß dadurch gelöst, dass zwei Handwagen mit jeweils der offenen Ladekante gegeneinander gestellt sind und dass die Ladefläche zur Ladekante hin ansteigt und diese obere Kante von oben frei zugänglich ist.

Beim Einsatz eines solchen Transportwagens wird der Quaderballen hochkant auf den Transportwagen derart aufgesetzt, dass die Mitte des Quaderballens auf etwa der oberen Kante liegt. Alternativ wird der Ballen vom Trecker oder Kran ca. 1 m über den Boden gehalten und die beiden Wagen werden seitlich unter den Ballen geschoben. Danach wird der Ballen auf die Wagen abgesenkt. Nach dem Zerschneiden der Schnüre zerfällt der Großballen in zwei Teile, von denen der eine Teil auf die Ladefläche des Transportwagens kippt und nach unten bis zur gegenüberliegenden Seite der Ladefläche rutscht, die insbesondere einen Endanschlag aufweist. Der Endanschlag kann geschlossen oder offen sein, zum Beispiel aus einer Bordwand oder aus Gitterstäben bestehen. Wesentlich ist nur, dass der Endanschlag das Weiterrutschen des geteilten Großballens über die untere Kante hinaus verhindert.

Vorzugsweise sind zwei gleichartige Transportwagen vorgesehen. Wenn diese mit ihren oberen Kanten (Ladekanten) aneinandergestellt werden, fallen die beiden Hälften des zerteilten Großballens in jeweils einen der beiden Wagen.

Der auf dem Transportwagen liegende halbe Großballen kann aufgrund seiner geringen Dimensionen und seines erheblich geringeren Gewichtes problemlos manuell direkt in den Pferdestall und durch die schmale Stalltür transportiert werden. Der Ballen ist auch im aufgeschnittenen Zustand noch leicht zu händeln und z. B. beim Füttern durch die Stallgasse zu schieben. An den Handgriffen 15 kann der Wagen auch leicht vor sich her geschoben werden, wenn man bei der Entnahme des Heus oder Strohs von der hohen Seite des Wagens arbeitet.

Im Folgenden wird ein Ausführungsbeispiel der Erfindung anhand von Zeichnungen näher beschrieben, die den zeitlichen Ablauf bei der Verwendung der Erfindung zeigen. Es zeigen.
- Figur 1: zwei erfindungsgemäße Transportwagen, unbeladen vor dem Einsatz,
- Figur 2: die beiden Wagen nach Figur 1, mit der offenen Seite und den jeweils oberen Kanten der Ladeflächen aneinander und gegenüber gestellt,
- Figur 3: eine perspektivische Darstellung beim Beladen der beiden Wagen mit dem Großballen,
- Figur 4: die Situation nach dem Wegfahren des Treckers,
- Figur 5: die Anordnung nach dem Zerschneiden der Schnüre des Großballens und
- Figur 6: die voneinander getrennten und auseinander gezogenen Transportwagen.

In allen Zeichnungen haben gleiche Bezugszeichen die gleiche Bedeutung und werden daher gegebenenfalls nur einmal erläutert.

Jeder Transportwagen 1, 2 ist als ein einfacher Handwagen mit Handgriff 3, Rädern 4, 5, einer Ladefläche 6, niedrigen Bordwänden 7, ggf. einer hohen Bordwand 8 und einer geschlossenen Stirnseite 9 ausgebildet und hat zwei Handgriffe 15 an der hohen Seite, um den Wagen von der Entnahmeseite her zu schieben.

Erfindungsgemäß ist die Ladefläche 6 in Fahrtrichtung geneigt, so dass die der Stirnseite 9 gegenüberliegende Kante 10 die höchste Stelle der Ladefläche 6 ist. Weiterhin ist charakteristisch, dass die der Stirnseite 9 gegenüberliegende Seite des Transportwagens offen ist, also keine Bordwand oder Ähnliches aufweist.

Entsprechend der schrägen Ladefläche 6 sind an der Stirnseite 9 kleine Lenk-Räder 4 und an der gegenüberliegenden, nach oben geneigten Seite große Räder 5 vorgesehen.

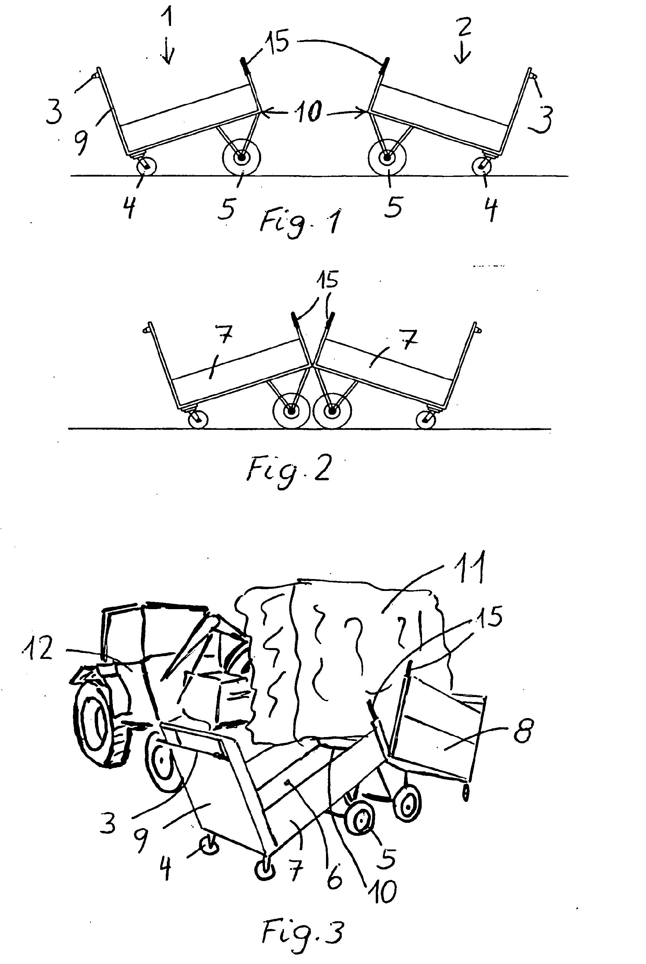

In den Figuren 1 bis 6 wird das mit dem erfindungsgemäßen Transportwagen mögliche einfache Zerteilen des Quaderballens 11 gezeigt.

Zunächst verwendet man vorzugsweise zwei derartige Transportwagen (Figur 1), die man mit der der Stirnseite 9 gegenüberliegenden offenen Seite gegenüberstellt (Figur 2).

Mit einem Trecker 12 legt man einen Großballen 11 Heu oder Stroh auf die beiden Transportwagen 1, 2 (Figur 3). Dazu positioniert man den Ballen in ca. 1 m Höhe und fährt die Transportwagen so unter den Ballen, dass sich die hohen Kanten 10 der Wagen mittig unter dem Ballen berühren. Wenn die Ballenbreite größer als 80 cm ist, stellt man den Ballen auf seine schmale Seite, wie es in Figur 3 gezeigt ist.

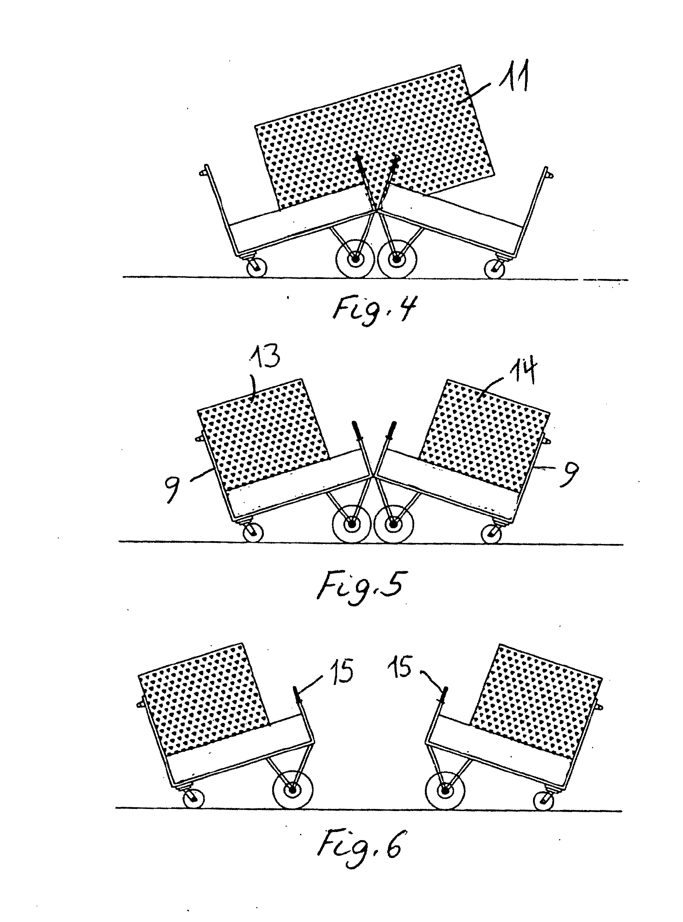

Nach dem Wegfahren des Treckers (Figur 4) zerschneidet man die Kordeln, so dass der Großballen 11 in zwei kleinere Ballen 13, 14 zerfällt, welche auf der Ladefläche 6 nach unten bis zur geschlossenen Stirnseite 9 der Transportwagen rutschen (Figur 5).

Danach werden die Wagen wieder auseinander gefahren (Figur 6). Anstelle eines unhandlichen Großballens 11 mit einem Gewicht bis zu 600 kg hat man nun zwei manuell handhabbare Transportwagen, auf denen jeweils ein halber Ballen (13, 14) aufliegt und mit denen man auch durch 90 cm breite Stalltüren fahren kann. Der Wagen kann bei längeren Fahrstrecken am Handgriff (3) geschoben werden. Bei der Entnahme des Strohs oder Heus steht man besser auf der hohen Seite des Wagens und kann dann an den Griffen 15 den Wagen von Futterstelle zu Futterstelle vor sich herschieben.

Durch die Schrägstellung des Wagens bleiben die Heu- oder Strohlagen auf dem Wagen stehen, ohne umzufallen. Wenn nötig, kann man noch eine Klappe anbringen, die nach Beladung des Wagens an der hohen Kante (10) hochgeklappt wird und ein Herunterfallen der äußeren Heulage verhindert.

Man kann mit Vorteil noch Haken oder kurze Ketten an der Vorderkante (10) vorsehen, mit denen die Wagen verbunden werden, damit sie bei der Beladung nicht auseinander rollen können.

Auch ein Hebegestänge ist vorteilhaft, mit dessen Hilfe der untere Teil des Wagens angehoben wird, damit während der Beladung eine durchgehende, glatte Ladefläche entsteht.

### Bezugszeichenliste

- 1: Transportwagen
- 2: Transportwagen
- 3: Handgriff
- 4: Rad klein
- 5: Rad groß
- 6: Ladefläche
- 7: Bordwand niedrig
- 8: Bordwand hoch
- 9: Stirnseite, Endanschlag
- 10: obere Kante, Ladekante
- 11: Großballen, Quaderballen
- 12: Trecker
- 13: halber Ballen
- 14: halber Ballen
- 15: Handgriff an der hohen Seite

## Patentansprüche

1. Zerkleinerungsvorrichtung für Großballen, wobei; zwei Handwagen mit jeweils der offenen Ladekante (10) gegeneinander gestellt sind und wobei die Ladefläche (6) zur Ladekante (10) hin ansteigt und diese obere Kante (10) von oben frei zugänglich ist.

2. Zerkleinerungsvorrichtung nach Anspruch 1,
**dadurch gekennzeichnet,**
**dass** die Ladefläche (6) in oder entgegen der Fahrtrichtung ansteigt.

3. Zerkleinerungsvorrichtung nach Anspruch 1,
**dadurch gekennzeichnet,**
**dass** die der oberen Kante (10) gegenüberliegende Seite der Ladefläche einen Endanschlag (9), insbesondere eine Bordwand, aufweist.

4. Zerkleinerungsvorrichtung nach Anspruch 1,
**dadurch gekennzeichnet,**
**dass** der Transportwagen an der Ladekante Griffe (15) hat, mit denen er geschoben werden kann.

## Claims

1. Size reduction device for large bales, wherein the respective open loading edges (10) of two hand carts are placed against one another, and wherein the loading surface (6) slopes upwards towards the loading edge (10) and this upper edge (10) is freely accessible from above.

2. Size reduction device according to claim 1, **characterised in that** the loading surface (6) slopes upwards in the direction of travel or in the opposite direction to the direction of travel.

3. Size reduction device according to claim 1, **characterised in that** the side of the loading surface opposite the upper edge (10) comprises a limit stop (9), more particularly an end wall.

4. Size reduction device according to claim 1, **characterised in that** the transport cart has handles (15) on the loading edge, by which it can be pushed.

## Revendications

1. Dispositif de réduction de grosses balles, dans lequel deux chariots à main sont disposés l'un contre l'autre au niveau du bord de chargement ouvert (10) et dans lequel la surface de chargement (6) monte vers le bord de chargement (10) et ce bord supérieur (10) est librement accessible du haut.

2. Dispositif de réduction selon la revendication 1, **caractérisé en ce que** la surface de chargement (6) monte dans le sens de la marche ou dans le sens contraire.

3. Dispositif de réduction selon la revendication 1, **caractérisé en ce que** le côté de la surface de chargement opposé au bord supérieur (10) présente une butée (9), notamment une paroi d'extrémité.

4. Dispositif de réduction selon la revendication 1, **caractérisé en ce que** le chariot de transport comporte, au niveau du bord de chargement, des poignées (15) permettant de le pousser.
